(19) Europäisches Patentamt
European Patent Office
Office européen des brevets

(11) **EP 3 784 702 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**02.10.2024   Patentblatt 2024/40**

(45) Hinweis auf die Patenterteilung:
**05.01.2022   Patentblatt 2022/01**

(21) Anmeldenummer: **19723779.5**

(22) Anmeldetag: **10.05.2019**

(51) Internationale Patentklassifikation (IPC):
*C08F 2/00* (2006.01)     *C08J 11/04* (2006.01)
*C08F 218/08* (2006.01)     *C08F 210/02* (2006.01)
*C08F 2/20* (2006.01)     *C08F 2/28* (2006.01)
*C08J 11/08* (2006.01)     *C08F 18/08* (2006.01)
*C08G 85/00* (2006.01)

(52) Gemeinsame Patentklassifikation (CPC):
(C-Sets verfügbar)
**C08G 85/008; C08F 2/008; C08F 2/20; C08F 2/28; C08F 18/08; C08F 210/02; C08F 218/08     (Forts.)**

(86) Internationale Anmeldenummer:
**PCT/EP2019/062055**

(87) Internationale Veröffentlichungsnummer:
**WO 2020/228927 (19.11.2020 Gazette 2020/47)**

(54) **VERFAHREN ZUR REINIGUNG EINES POLYMERISATIONSREAKTORS**

METHOD FOR CLEANING A POLYMERIZATION REACTOR

PROCÉDÉ DE NETTOYAGE D'UN RÉACTEUR DE POLYMÉRISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.03.2021   Patentblatt 2021/09**

(73) Patentinhaber: **Wacker Chemie AG**
**81671 München (DE)**

(72) Erfinder:
• **WEITZEL, Hans-Peter**
**84571 Reischach (DE)**
• **BRAUNSPERGER, Robert**
**84547 Emmerting (DE)**

(74) Vertreter: **Ege, Markus et al**
**Wacker Chemie AG**
**Gisela-Stein-Straße 1**
**81671 München (DE)**

(56) Entgegenhaltungen:
**DE-A1- 19 856 590     US-A- 5 064 917**

**(Forts. nächste Seite)**

(52) Gemeinsame Patentklassifikation (CPC): (Forts.)

C-Sets
**C08F 18/08, C08F 2/008;**
**C08F 18/08, C08F 2/20;**
**C08F 210/02, C08F 2/008;**
**C08F 210/02, C08F 2/20;**
**C08F 210/02, C08F 2/28;**
**C08F 218/08, C08F 210/02;**
C08F 210/02, C08F 218/08

**Beschreibung**

Die Erfindung betrifft ein Verfahren zur Reinigung eines Polymerisationsreaktors, welcher zur Herstellung von wässrigen Polymerdispersionen mittels radikalisch initiierter Emulsionspolymerisation von radikalisch polymerisierbaren ethylenisch ungesättigten Monomeren genutzt wird.

Wässrige Polymerdispersionen werden in vielfältigen Anwendungsgebieten als Bindemittel eingesetzt, beispielsweise in Klebstoffen, Coatinganwendungen, als Bindemittel in Teppich-, Textil- und Papieranwendungen sowie in bauchemischen Produkten wie beispielsweise Fliesenkleber, Putzen und Dichtungsmassen. Die Herstellung dieser wässrigen Dispersionen erfolgt üblicherweise durch wässrige Emulsionspolymerisation, entweder chargenweise (diskontinuierlich) in gerührten Polymerisationsreaktoren oder auch kontinuierlich in Rührkesselkaskaden. Die Prozesseffizienz wird dabei durch die Abfuhr der freiwerdenden Wärme über Kühlflächen, beispielsweise Kühlschlangen und Reaktorwand, limitiert.

Zusätzlich limitiert wird die Wärmeabfuhr durch Bildung von Wandbelag, dem sogenannten Fouling. Dieser Wandbelag besteht im Wesentlichen aus Polymer, das im Polymerisationsprozess nicht ausreichend stabilisiert wird und sich auf den Oberflächen der Reaktorinnenwand oder der Einbauten niederschlägt. Zur Verbesserung der Wärmeabfuhr müssen die Reaktoren daher bei diskontinuierlicher Polymerisation nach einer oder mehreren Chargen aufwändig gereinigt werden, zum Beispiel mit organischen Lösungsmitteln oder rein mechanisch durch Hochdruckreinigung mit Wasser unter hohem Druck.

Zur Verhinderung von Wandbelag können die Innenseite des Polymerisationsreaktors und die Oberflächen von dessen Einbauten mit einem Ablagerungsverhinderungsmittel beschichtet werden, wie beschrieben in der EP 0152115 B1 und der EP 3256497 B1. Nachteilig ist dabei der Aufwand zur Beschichtung und die Gefahr der Kontamination des Polymerisationsproduktes mit dem belagshemmenden Beschichtungsmittel.

Zur Entfernung von bereits gebildetem Wandbelag sind mechanische Verfahren bekannt. In der US 6274690 B1 wird vorgeschlagen, die Reaktorinnenwände mit einem Wasserstrahl zu reinigen. Die EP 2689838 A1 beschreibt ein Verfahren zur Polymerisation, wobei dem Polymerisationsgemisch, zur Verhinderung der Belagsbildung während der Polymerisation, inerte Scheuerpartikel zugemischt werden. In dem kontinuierlichen Polymerisationsverfahren in einem Rohrreaktor aus der EP 2658644 B1 werden die Reaktorinnenflächen mit Schabern und Wischern gereinigt. Bei dem Verfahren aus der WO 98/29186 A1 werden die Reaktorwände zur Verhinderung der Belagsbildung in Vibration versetzt. In der US 2006/0130870 A1 wird ein Verfahren zur Reinigung der Wände eines Polymerisationsreaktors mittels Behandlung mit niederfrequenten Schallwellen beschrieben. Nachteilig ist bei diesen mechanischen Verfahren der apparative Aufwand und die Gefahr der Belagsbildung an den für diese Verfahren erforderlichen Reaktoreinbauten.

Die Reinigung der Innenseiten von Polymerisationsreaktoren kann auch mit chemischen Mitteln erfolgen. In der US 4038473 wird der bei der Polymerisation von Vinylchlorid gebildete Wandbelag mit heißer alkalischer Detergenzlösung entfernt. In dem Verfahren aus der EP 0057433 A1 wird zur Reinigung eine wässrige Tensidlösung mit polyvalenten Metallsalzen eingesetzt. In der EP 0633061 A1 wird eine kontinuierliche Emulsionspolymerisation in einem Rohrreaktor beschrieben, wobei der Reaktor mit einer Tensidlösung gereinigt wird. Die US 4904309 setzt ebenfalls eine Tensidlösung zur Reinigung ein. In der EP 3351612 A1 wird der Polymerisationsreaktor mit einer nichtionischen Tensidlösung ausgespült. Die EP 1230019 B1 beschreibt die Emulsionspolymerisation in einem Schlaufenreaktor, bei welcher der Polymerisationsreaktor mit Wasser gereinigt wird und das Waschwasser bei der Polymerisation wiederverwendet wird. Gemäß der EP 0248681 B1 wird zur Reinigung der Reaktorinnenseiten eine Kombination aus Seifenbildnern wie Alkalisilikaten oder Alkaliphosphaten, einem alkalischen Mittel wie Alkalihydroxid oder Alkalicarbonat, einem Tensid und einem organischen Lösungsmittel wie Xylol oder Toluol, gegebenenfalls in Kombination mit Monomer, eingesetzt. Nachteilig ist bei den chemischen Reinigungsverfahren der Zeitaufwand für die Reinigung und die Gefahr der Kontamination der Produkte mit den Bestandteilen der Waschlösungen.

Es bestand daher die Aufgabe ein verbessertes Verfahren zur Reinigung von Reaktoren, die zur Herstellung von wässrigen Polymerdispersionen genutzt werden, zur Verfügung zu stellen, mit welchem polymere Wandbeläge effektiv entfernt werden, und welches eine verbesserte Anlagenverfügbarkeit (kürzere Ausfallzeit durch Reinigung) und weniger Abfall durch Reinigungslösungen gewährleistet.

Gegenstand der Erfindung ist ein Verfahren zur Reinigung eines Polymerisationsreaktors zur Herstellung von wässrigen Polymerdispersionen mittels radikalisch initiierter Emulsionspolymerisation von einem oder mehreren ethylenisch ungesättigten Monomeren in Gegenwart von einem oder mehreren Schutzkolloiden und/oder Emulgatoren, dadurch gekennzeichnet, dass im Polymerisationsreaktor eine wässrige Mischung vorgelegt wird, welche ein oder mehrere ethylenisch ungesättigte Monomere, ein oder mehrere Schutzkolloide und/oder Emulgatoren enthält und keinen Oxidationsinitiator enthält, wobei der Anteil der ethylenisch ungesättigten Monomere 20 bis 70 Gew.-%, bezogen auf das Gesamtgewicht der wässrigen Mischung beträgt, anschließend die wässrige Mischung auf eine Temperatur von 70°C bis 100°C erwärmt wird, und der Polymerisationsreaktor 5 Minuten bis 3 Stunden mit der wässrigen. Mischung behandelt wird, danach ein oder mehrere Initiatoren und gegebenenfalls weitere Ausgangsstoffe zugegeben werden, danach die Polymerisation initiiert wird, und die damit erhaltene wässrige Polymerdispersion aus dem Polymerisationsreaktor entfernt wird und zur Entfernung der während der Behandlung abgelösten Wandbeläge nachbehandelt wird.

Die Herstellung von wässrigen Polymerdispersionen mittels radikalisch initiierter Emulsionspolymerisation ist vielfach vorbeschrieben und dem Fachmann bekannt; beispielsweise in Encyclopedia of Polymer Science and Engineering, Vol. 8 (1987), John Wiley and Sons, S. 659-677.

Die ethylenisch ungesättigten Monomere werden vorzugsweise ausgewählt aus der Gruppe umfassend Vinylester, (Meth)acrylsäureester, Vinylaromaten, Olefine und Vinylhalogenide und gegebenenfalls weitere damit copolymerisierbare Monomere. Geeignete Vinylester sind solche von Carbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 11 C-Atomen, beispielsweise VeoVa9$^®$ oder VeoVa10$^®$ (Handelsnamen der Firma Hexion). Besonders bevorzugt ist Vinylacetat. Geeignete Monomere aus der Gruppe der Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat. Als Vinylaromaten bevorzugt sind Styrol, Methylstyrol und Vinyltoluol. Als Olefine bevorzugt sind Ethylen, Propylen und Butadien. Bevorzugtes Vinylhalogenid ist Vinylchlorid.

Besonders bevorzugt werden Comonomergemische enthaltend Vinylacetat und 1 bis 40 Gew.-% Ethylen; sowie Gemische enthaltend Vinylacetat und 1 bis 40 Gew.-% Ethylen und 1 bis 50 Gew.-% von einem oder mehreren weiteren Comonomeren aus der Gruppe Vinylester mit 3 bis 15 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und

Gemische enthaltend Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und

Gemische enthaltend 30 bis 75 Gew.-% Vinylacetat, 1 bis 30 Gew.-% Vinyllaurat oder Vinylester einer alphaverzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten;

sowie Gemische enthaltend Vinylacetat, 1 bis 40 Gew.-% Ethylen und 1 bis 60 Gew.-% Vinylchlorid; wobei die Gemische gegebenenfalls noch weitere Monomere enthalten können, und wobei sich die Angaben in Gew.-% auf jeweils 100 Gew.-% aufaddieren.

Geeignete Schutzkolloide sind beispielsweise teilverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine, Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Polydiallyldimethylammoniumchlorid (Poly-DADMAC). Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015).

Geeignete Emulgatoren sind beispielsweise anionische und/oder nichtionische Emulgatoren. Beispiele für anionische Emulgatoren sind Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylenoxid- oder Propylenoxideinheiten, Alkyl- oder Alkylarylsulfonate mit 8 bis 18 C-Atomen, Ester und Halbester der Sulfobernsteinsäure mit einwertigen Alkoholen. Beispiele für nichtionische Emulgatoren sind $C_{12}$-$C_{14}$-Fettalkoholethoxylate mit einem Ethoxylierungsgrad von 2 bis 20 Ethylenoxid-Einheiten.

Die Schutzkolloide und/oder Emulgatoren werden im Allgemeinen in einer Menge von insgesamt 1 bis 20 Gew.-% bezogen auf das Gesamtgewicht der Monomere, bei der Vorbehandlung oder der Polymerisation eingesetzt.

Bei der erfindungsgemäßen Reinigung werden das Wasser, die Monomere und die Schutzkolloide und/oder Emulgatoren als wässrige Mischung im Polymerisationsreaktor vorgelegt, und diese Mischung im Polymerisationsreaktor, vorzugsweise unter Rühren, bewegt. Der Monomergehalt in der wässrigen Mischung beträgt im Allgemeinen 25 bis 70 Gew.-%, vorzugsweise 30 bis 70 Gew.-%, besonders bevorzugt 40 bis 70 Gew.-%, jeweils bezogen auf das Gesamtgewicht der wässrigen Mischung. Je höher der Monomergehalt in der Mischung ist, umso effektiver werden die polymeren Wandanlagerungen, aufgrund der Quellung und Lösung des Polymers im Monomer, gelöst. Die Obergrenze für den Monomeranteil ist dabei so zu bemessen, dass die Emulsion nicht von Öl-in-Wasser zu Wasser-in-Öl kippt. Das Schutzkolloid und/oder der Emulgator werden vorzugsweise bereits in den für die Polymerisation erforderlichen Mengen in der Vorlage eingesetzt. Es wird kein Oxidationsinitiator vorgelegt. Vorzugsweise wird weder Oxidationsinitiator noch Reduktionsinitiator vorgelegt.

Die Füllmenge der wässrigen Mischung im Polymerisationsreaktor beträgt im Allgemeinen 40 bis 95 Vol.-%, vorzugsweise 50 bis 95 Vol.-%, besonders bevorzugt 70 bis 95 Vol.-%, jeweils bezogen auf das Reaktorvolumen.

Die wässrige Mischung wird, vorzugsweise unter Rühren, auf eine Temperatur von 70°C bis 100°C, besonders bevorzugt auf 80 bis 100°C erwärmt. Die Temperatur wird so gewählt, dass ein Sieden der Mischung und eine vorzeitige Polymerisation vermieden wird. Gegebenenfalls kann die Behandlung auch unter Druck durchgeführt werden.

Nach Erreichen der gewünschten Temperatur wird der Polymerisationsreaktor, vorzugsweise unter Rühren, im Allgemeinen über einen Zeitraum von 5 Minuten bis 3 Stunden, vorzugsweise 10 Minuten bis 2 Stunden, besonders bevorzugt 20 Minuten bis 1 Stunde mit der wässrigen Mischung behandelt (gereinigt).

Nach Abschluss dieser Behandlung kann die wässrige Mischung gegebenenfalls abgekühlt werden. Die Mischung kann gegebenenfalls mit Wasser verdünnt werden. Gegebenenfalls können noch Monomere, Schutzkolloid und/oder Emulgator oder weitere Ausgangsstoffe, beispielsweise Puffer oder Regler, zugegeben werden.

Zur Initiierung der Polymerisation wird der Initiator zu der wässrigen Mischung gegeben und die wässrige Mischung auf die Polymerisationstemperatur erhitzt.

Die Initiierung der Polymerisation erfolgt mit den für die Emulsionspolymerisation gebräuchlichen Initiatoren, insbesondere Redox-Initiator-Kombinationen aus Oxidationsinitiator und Reduktionsinitiator. Beispiele für geeignete Oxidationsinitiatoren sind die Natrium-, Kalium- und Ammoniumsalze der Peroxodischwefesäure, Wasserstoffperoxid und Azobisisobutyronitril. Bevorzugt werden die Natrium-, Kalium- und Ammoniumsalze der Peroxidischwefelsäure und Wasserstoffperoxid. Die genannten Oxidationsinitiatioren werden im Allgemeinen in einer Menge von 0,01 bis 2,0 Gew.-%, bezogen auf das Gesamtgewicht der Monomere, eingesetzt.

Geeignete Reduktionsmittel (Reduktionsinitiatoren) sind beispielsweise die Sulfite und Bisulfite der Alkalimetalle und von Ammonium, beispielsweise Natriumsulfit; die Derivate der Sulfoxylsäure wie Zink- oder Alkaliformaldehydsulfoxylate, beispielsweise Natriumhydroxymethansulfinat (Brüggolit) und Ascorbinsäure, Isoascorbinsäure oder deren Salze; oder formaldehydfreie Reduktionsmittel wie 2-Hydroxy-2-sulfinato-essigsäure-di-Natriumsalz (Brüggolith FF6). Die Reduktionsinitiatormenge beträgt vorzugsweise 0,015 bis 3 Gew.-%, bezogen auf das Gesamtgewicht der Monomere.

Die Polymerisation erfolgt unter den für eine Emulsionspolymerisation typischen Bedingungen. Die Polymerisationstemperatur liegt vorzugsweise zwischen 50°C und 110°C. Der Druck hängt davon ab, ob die zu polymerisierenden Monomere bei der jeweiligen Polymerisationstemperatur flüssig oder gasförmig vorliegen und beträgt vorzugsweise 1 bis 110 barabs.. Bei der Copolymerisation von gasförmigen Comonomeren wie Ethylen, 1,3-Butadien oder Vinylchlorid wird unter Druck, und besonders bevorzugt bei 10 bis 80 barabs., polymerisiert.

Nach Abschluss der Polymerisation wird das Produktgemisch aus dem Polymerisationsreaktor entfernt und gegebenenfalls mittels Entgasung, Nachpolymerisation und/oder Strippen nachbehandelt. Die damit erhaltene Polymerdispersion enthält die bei der Reinigung abgelösten Wandbeläge. Die Polymerdispersion wird deshalb zur Entfernung der abgelösten Wandbeläge nachbehandelt, vorzugweise filtriert. Nach der Nachbehandlung hat die Polymerdispersion vorzugsweise die Spezifikation einer ohne Vorbehandlung erhaltenen Polymerdispersion und kann mit in herkömmlicher Weise erhaltenen Chargen zur Lagerung abgemischt werden.

Der Polymerisationsreaktor ist nach Abfüllung dieser Reinigungscharge und gegebenenfalls nach Spülung mit Wasser in einem gereinigten Zustand und sofort wieder einsatzbereit.

Die Häufigkeit der Reinigung mit dem erfindungsgemäßen Verfahren hängt von spezifischen Gegebenheiten ab, wie Umfang der Reaktoreinbauten, Produktportfolio (Zusammensetzung der Monomerchargen), Verschmutzungsanfälligkeit (abhängig von Kolloidstabilität oder Scherstabilität der erzeugten Polymerisate). Vorzugsweise wird das erfindungsgemäße Verfahren eingesetzt, bevor der Reaktor extrem mit polymeren Wandbelägen verschmutzt ist, da sonst der Reinigungseffekt nachlässt und der Filtrationsaufwand steigt. Das Ausmaß des, während der Polymerisation oder während mehreren hintereinander ausgeführten Polymerisationen, gebildeten Wandbelags lässt sich mittels der Abnahme der Kühlleistung des Polymerisationsreaktors messen. Bei einem sauberen Polymerisationsreaktor ohne polymere Wandbeläge ist die Kühlleistung 100 %. Mit zunehmender Bildung von polymeren Wandbelägen nimmt die Kühlleistung näherungsweise proportional dazu ab.

Die Kühlleistung Q* entspricht im Allgemeinen mindestens der freigesetzten Polymerisationswärme und wird in Kilowatt (kW) gemessen. Die Kühlleistung Q* wird durch folgende Beziehung definiert:

$$Q* = \alpha * A * \Delta T,$$

wobei gilt

$\alpha$ = Wärmeübergangskoeffizient [W/(m$^2$K)], A = Wärmeaustauschfläche [m$^2$], $\Delta T$ = Temperaturdifferenz [K](Differenz Reaktortemperatur zu Kühlwassertemperatur). Die Austauschfläche ist konstant, verändert sich nicht. Der Wärmeübergangskoeffizient ist in der Regel nicht genau bekannt und verschlechtert sich durch die Wandbelagsbildung. Um wieder auf die gleiche Kühlleistung zu kommen, muss das ΔT also bei Verschlechterung der Kühlleistung entsprechend größer werden.

Die prozentuale Änderung von ΔT entspricht somit näherungsweise der Änderung der Kühlleistung durch Verschlechterung des Wärmeübergangskoeffizienten α. Wenn sich zum Beispiel die Temperaturdifferenz ΔT von 10°C auf 11°C erhöht, beträgt die Kühlleistung nur noch 10/11 = 90,9 % der anfänglichen Kühlleistung ohne Wandbelagsbildung.

Bevorzugt wird das erfindungsgemäße Verfahren eingesetzt, wenn der Polymerisationsreaktor durch Verschmutzung (Wandbelagsbildung) nur noch 50 bis 95 % der anfänglichen Kühlleistung zeigt, besonders bevorzugt nur noch 60 bis 90 % der anfänglichen Kühlleistung zeigt, am meisten bevorzugt nur noch 70 bis 85 % der anfänglichen Kühlleistung zeigt.

Mit dem erfindungsgemäßen Verfahren wird angestrebt, dass nach Anwendung des erfindungsgemäßen Reinigungsverfahrens wieder mehr als 95 % der anfänglichen Kühlleistung ohne Wandbelag erhalten werden.

Das erfindungsgemäße Verfahren eignet sich vorzugsweise zur Reinigung von Polymerisationsreaktoren, welche zur diskontinuierlichen Polymerisation verwendet werden. Bei der diskontinuierlichen Polymerisation wird der Polymerisationsreaktor mit den Edukten befüllt, die Polymerisation durchgeführt, und der Reaktor entleert. Für die nächste Charge wird der Polymerisationsreaktor wieder befüllt, polymerisiert und nach Abschluss der Polymerisation wieder entleert. Das erfindungsgemäße Verfahren kann zur Reinigung von Polymerisationsreaktoren, nach einer oder mehreren Chargen, vorzugsweise nach 20 bis 30 Chargen, eines diskontinuierlichen Polymerisationsverfahrens eingesetzt werden.

Beim erfindungsgemäßen Vorgehen werden die Zeitverluste bedingt durch die Reinigung des Polymerisationsreaktors auf ein Minimum reduziert. Ein weiterer Vorteil ist, dass kein Abfall durch Reinigungsmittel, wie organische Lösemittel, entsteht. Besonders vorteilhaft ist, dass auch in dem, dem Reinigungsschritt folgenden, Polymerisationsschritt Produkt erzeugt wird und keine Abfälle erzeugt werden.

Die nachfolgenden Beispiele dienen der weiteren Erläuterung der Erfindung: Allgemeine Polymerisationsvorschrift (Ansatz 1):

In einem Druckreaktor mit einem Volumen von ca. 600 Liter wurden folgende Komponenten vorgelegt:

> 115 kg Wasser,
> 105 kg einer 20 Gew.-%igen Polyvinylalkohollösung eines teilverseiften Polyvinylalkohols mit einem Hydrolysegrad von 88 Mol-% und einer Höpplerviskosität von 4 mPas (Methode nach Höppler gemäß DIN 53015 bei 20°C und in 4 %-iger wässriger Lösung),
> 11 kg einer 10 Gew.-%igen Polyvinylalkohollösung eines teilverseiften Polyvinylalkohols mit einem Hydrolysegrad von 88 Mol-% und einer Höpplerviskosität von 25 mPas,
> 70 g einer 85 %-igen wässrigen Lösung von Ameisensäure,
> 80 g einer 10 %-igen wässrigen Eisenammoniumsulfatlösung.

Der Reaktor wurde evakuiert, dann wurden zur wässrigen Vorlage 220 kg Vinylacetat gegeben. Anschließend wurde der Reaktor auf 55°C aufgeheizt und mit einem Ethylendruck von 32 bar beaufschlagt (entsprechend einer Menge von 28 kg Ethylen).

Die Polymerisation wurde durch Zugabe von 3 Gew.%-iger wässriger Kaliumpersulfatlösung mit einer Rate von 1,5 kg/h und Zugabe von 1,5 Gew.%-iger wässriger Natriumhydroxymethansulfinat-Lösung (Brüggolit) mit einer Rate von 1,5 kg/h gestartet. Nach Beobachten des Polymerisationsbeginnes wurde die Innentemperatur innerhalb 30 min auf 85°C erhöht. Der Druck wurde ab Reaktionsbeginn auf 55 bar erhöht und gehalten bis weitere 10 kg Ethylen dosiert waren. Anschließend wurde das Ethylenventil geschlossen und der Druck fallen gelassen. Ab Erreichen der 75°C Polymerisationstemperatur wurden weitere 55 kg Vinylacetat innerhalb 2 Stunden zudosiert und die Initatorraten auf eine Rate von 2,0 kg/h bis 2,5 kg/h gesteigert. Nach dem Dosierende von Vinylacetat liefen die Initiatoren noch weitere 60 Minuten um den Ansatz auszupolymerisieren.

Die Gesamtpolymerisationszeit betrug ca. 5 Stunden, die mittlere Wärmeleistung der Polymerisation betrug ca. 28 kW. Die Manteleintrittstemperatur (Kühlwassertemperatur) zur Einhaltung der gewünschten Polymerisationstemperatur (Reaktortemperatur) von 85°C betrug im Minimum 77°C. Die Temperaturdifferenz ΔT betrug folglich 8°C.

Die Dispersion wurde anschließend zur Abtrennung und Einstellung in einen Drucklosreaktor transferiert und dort durch Zugabe von 500 g einer 10 Gew.%-igen wässrigen Lösung von tertiär-Butylhydroperoxid und 145 g einer 10 Gew.%-igen wässrigen Lösung von Brüggolit nachpolymerisiert. Der pH-Wert wurde durch Zugabe von Natronlauge (10 Gew.%-ige wässrige Lösung) auf pH ~ 4,5 eingestellt. Der Druckreaktor wurde abschließend noch mit 15 kg Wasser gespült.

Produkteigenschaften:

| Festgehalt: | 57,9 % |
|---|---|
| pH: | 4,5 |
| Viskosität (Brookfield bei 23°C und 20 Upm): | 1800 mPas |
| Partikelgröße Dw (Beckmann Coulter): | 1,2 $\mu$m |
| Glasübergangstemperatur Tg (DSC nach ISO 11357): | 16°C |

Wiederholung der allgemeinen Polymerisationsvorschrift (Ansätze 2 bis 20) :
Die Polymerisation entsprechend der allgemeinen Vorschrift wurde 19 Mal wiederholt, wobei der Polymerisationsreaktor zwischen jedem Ansatz nur mit Wasser gespült wurde und nicht weiter gereinigt wurde.

Nach dem 20igsten Ansatz wurde bei gleicher Polymerisationszeit pro Charge und gleicher Wärmeleistung von 28 kW pro Charge ein Absinken der Manteleintrittstemperatur auf 72°C beobachtet. Die Differenz zur Polymerisationstemperatur betrug somit $\Delta T = 13°C$ und war deutlich höher als im sauberen Zustand des Reaktors (Ansatz 1) mit $\Delta T = 8°C$.

Der Anstieg von $\Delta T$ von 8°C auf 13°C entspricht einer Abnahme der Kühlleistung auf 8/13 = 61,5 % der anfänglichen Kühlleistung ohne Wandbelag.

Beispiel für das erfindungsgemäße Verfahren: Reinigungsansatz (Ansatz 21) :
Der Reaktor wurde wie in der allgemeinen Vorschrift beschrieben mit Wasser, Polyvinylalkohollösung, Ameisensäurelösung, Eisenammoniumsulfatlösung, Vinylacetat und Ethylen befüllt. Anschließend wurde die im Reaktor vorliegende Mischung auf 85°C aufgeheizt und für 30 Minuten bei dieser Temperatur gerührt. Anschließend wurde der Reaktorinhalt mittels Mantelkühlung wieder auf 55°C abgekühlt.

Dann wurde die Polymerisation durch Zugabe von 3 Gew.%-iger wässriger Kaliumpersulfatlösung mit einer Rate von 1,5 kg/h und Zugabe von 1,5 Gew.%-iger wässriger Natriumhydroxymethansulfinat-Lösung (Brüggolit) mit einer Rate von 1,5 kg/h gestartet, und die Polymerisation wie in der allgemeinen Vorschrift beschrieben durchgeführt.

Nach diesem Ansatz gemäß dem erfindungsgemäßen Verfahren zur Reinigung wurde beobachtet, dass die Manteleintrittstemperatur zur Einhaltung der gewünschten Polymerisationstemperatur von 85°C im Minimum 76,7°C betrug. Es lag also eine Differenz von $\Delta T = 8,3°C$ vor, vergleichbar mit der Differenz in Ansatz 1 von $\Delta T = 8°C$. Dieses Temperaturverhalten belegt, dass durch das erfindungsgemäße Vorgehen der Reaktor wieder in einen sauberen Zustand überführt worden ist. Der Quotient der Kühlleistung 8/8,3 = 96,4% zeigt, dass nach der Reinigung wieder 96,4 % der anfänglichen Kühlleistung ohne Wandbelag erhalten wurden. Das heißt, dass die Wandbeläge mit der erfindungsgemäßen Behandlung nahezu vollständig abgelöst worden sind.

Auf Grund der in dieser Charge enthaltenen abgelösten Wandbeläge wurde diese Charge separiert und sorgfältig von den abgelösten Reaktorwandbelägen filtriert. Das danach erhaltene Produkt hat die gleichen Produkteigenschaften wie für Ansatz 1 beschrieben. Die Dispersion wurde dann den Produkten aus Ansatz 1 bis Ansatz 20 zugemischt.

## Patentansprüche

1.  Verfahren zur Reinigung eines Polymerisationsreaktors zur Herstellung von wässrigen Polymerdispersionen mittels radikalisch initiierter Emulsionspolymerisation von einem oder mehreren ethylenisch ungesättigten Monomeren in Gegenwart von einem oder mehreren Schutzkolloiden und/oder Emulgatoren, **dadurch gekennzeichnet, dass** im Polymerisationsreaktor eine wässrige Mischung vorgelegt wird, welche ein oder mehrere ethylenisch ungesättigte Monomere, ein oder mehrere Schutzkolloide und/oder Emulgatoren enthält und keinen Oxidationsinitiator enthält, wobei der Anteil der ethylenisch ungesättigten Monomere 20 bis 70 Gew.-%, bezogen auf das Gesamtgewicht der wässrigen Mischung beträgt, anschließend die wässrige Mischung auf eine Temperatur von 70°C bis 100°C erwärmt wird, und der Polymerisationsreaktor 5 Minuten bis 3 Stunden mit der wässrigen Mischung behandelt wird, danach ein oder mehrere Initiatoren und gegebenenfalls weitere Ausgangsstoffe zugegeben werden, danach die Polymerisation initiiert wird, und die damit erhaltene wässrige Polymerdispersion aus dem Polymerisationsreaktor entfernt wird und zur Entfernung der während der Behandlung abgelösten Wandbeläge nachbehandelt wird.

2.  Verfahren nach Anspruch 1, **dadurch gekennzeichnet, dass** weder Oxidationsinitiator noch Reduktionsinitiator in der wässrigen Mischung vorgelegt werden.

3.  Verfahren nach Anspruch 1 oder 2, **dadurch gekennzeichnet, dass** das Verfahren durchgeführt wird, wenn der Polymerisationsreaktor nur noch 50 bis 95 % der Kühlleistung ohne Wandbelag zeigt.

**4.** Verfahren nach Anspruch 1 bis 3, **dadurch gekennzeichnet, dass** das Verfahren nach einer oder mehreren Chargen eines diskontinuierlichen Polymerisationsverfahrens durchgeführt wird.

**5.** Verfahren nach Anspruch 1 bis 3, **dadurch gekennzeichnet, dass** das Verfahren nach 20 bis 30 Chargen eines diskontinuierlichen Polymerisationsverfahrens durchgeführt wird.

**6.** Verfahren nach Anspruch 1 bis 5, **dadurch gekennzeichnet, dass** der Polymerisationsreaktor 20 Minuten bis 1 Stunde mit der wässrigen Mischung behandelt wird.

**Claims**

**1.** Process for cleaning a polymerization reactor for producing aqueous polymer dispersions by means of radically initiated emulsion polymerization of one or more ethylenically unsaturated monomers in the presence of one or more protective colloids and/or emulsifiers, **characterized in that** an aqueous mixture is initially charged in the polymerization reactor which comprises one or more ethylenically unsaturated monomers, one or more protective colloids and/or emulsifiers and does not comprise an oxidation initiator, wherein the proportion of the ethylenically unsaturated monomers is 20 to 70% by weight, based on the total weight of the aqueous mixture, then the aqueous mixture is heated to a temperature of 70°C to 100°C, and the polymerization reactor is treated with the aqueous mixture for 5 minutes to 3 hours, then one or more initiators and optionally further starting materials are added, then the polymerization is initiated, and the aqueous polymer dispersion thus obtained is removed from the polymerization reactor and is post-treated to remove the wall deposits detached during the treatment.

**2.** Process according to Claim 1, **characterized in that** neither the oxidation initiator nor the reduction initiator are initially charged in the aqueous mixture.

**3.** Process according to Claim 1 or 2, **characterized in that** the process is carried out when the polymerization reactor exhibits only 50 to 95% of the cooling capacity without wall deposits.

**4.** Process according to Claims 1 to 3, **characterized in that** the process is carried out after one or more batches of a batch polymerization process.

**5.** Process according to Claims 1 to 3, **characterized in that** the process is carried out after 20 to 30 batches of a batch polymerization process.

**6.** Process according to Claims 1 to 5, **characterized in that** the polymerization reactor is treated with the aqueous mixture for 20 minutes to 1 hour.

**Revendications**

**1.** Procédé pour le nettoyage d'un réacteur de polymérisation destiné à la production de dispersions aqueuses de polymères par polymérisation en émulsion amorcée par voie radicalaire d'un ou de plusieurs monomères à insaturation éthylénique en présence d'un ou de plusieurs colloïdes protecteurs et/ou émulsifiants, **caractérisé en ce qu'**on dispose au préalable dans le réacteur de polymérisation un mélange aqueux qui contient un ou plusieurs monomères à insaturation éthylénique, un ou plusieurs colloïdes protecteurs et/ou émulsifiants et ne contient aucun amorceur d'oxydation, la proportion des monomères à insaturation éthylénique valant de 20 à 70 % en poids par rapport au poids total du mélange aqueux, ensuite on chauffe le mélange aqueux jusqu'à une température de 70 °C à 100 °C, et on traite le réacteur de polymérisation avec le mélange aqueux pendant 5 minutes à 3 heures, ensuite on ajoute un ou plusieurs amorceurs et éventuellement produits de départ supplémentaires, puis on amorce la polymérisation, et la dispersion aqueuse de polymère ainsi obtenue est retirée du réacteur de polymérisation et soumise à un post-traitement pour l'élimination des dépôts détachés des parois pendant le traitement.

**2.** Procédé selon la revendication 1, **caractérisé en ce qu'**on ne dispose au préalable dans le mélange aqueux ni amorceur d'oxydation, ni amorceur de réduction.

**3.** Procédé selon la revendication 1 ou 2, **caractérisé en ce qu'**on effectue le procédé lorsque le réacteur de polymérisation ne présente plus que 50 à 95 % du pouvoir de refroidissement sans dépôt sur les parois.

4. Procédé selon l'une quelconque des revendications 1 à 3, **caractérisé en ce qu'**on effectue le procédé après une ou plusieurs charges d'un procédé de polymérisation discontinu.

5. Procédé selon l'une quelconque des revendications 1 à 3, **caractérisé en ce qu'**on effectue le procédé après 20 à 30 charges d'un procédé de polymérisation discontinu.

6. Procédé selon l'une quelconque des revendications 1 à 5, **caractérisé en ce qu'**on traite le réacteur de polymérisation avec le mélange aqueux pendant 20 minutes à 1 heure.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0152115 B1
- EP 3256497 B1
- US 6274690 B1
- EP 2689838 A1
- EP 2658644 B1
- WO 9829186 A1
- US 20060130870 A1

- US 4038473 A
- EP 0057433 A1
- EP 0633061 A1
- US 4904309 A
- EP 3351612 A1
- EP 1230019 B1
- EP 0248681 B1

**In der Beschreibung aufgeführte Nicht-Patentliteratur**

- Encyclopedia of Polymer Science and Engineering. John Wiley and Sons, 1987, vol. 8, 659-677